(19)

Europäisches
Patentamt
European
Patent Office
Office européen
des brevets

(11) **EP 2 071 163 A2**

(12) **EUROPEAN PATENT APPLICATION**

(43) Date of publication:
**17.06.2009 Bulletin 2009/25**

(51) Int Cl.:
**F02D 41/02** *(2006.01)*

(21) Application number: **08171161.6**

(22) Date of filing: **10.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **13.12.2007 JP 2007321955**

(71) Applicant: **Toyota Jidosha Kabushiki Kaisha
Toyota-shi, Aichi-ken 471-8571 (JP)**

(72) Inventor: **Saigo, Yusuke
Toyota-shi, Aichi-ken 471-8571 (JP)**

(74) Representative: **Intes, Didier Gérard André et al
Cabinet Beau de Loménie
158, rue de l'Université
75340 Paris Cedex 07 (FR)**

(54) **Control apparatus for engine and method of controlling engine**

(57)     An ECU executes a program including steps of: calculating a first speed 10NE of a crankshaft based on a time required for rotating the crankshaft by a crank angle of 10° (S100); calculating a second speed 180NE based on a time required for rotating the crankshaft by a crank angle of 180° (S102); and decreasing an output of an engine when a difference ΔNE between the first speed 10NE and the second speed 180NE is larger than a first threshold (YES in S 110) (S 112).

FIG.6

**Description**

BACKGROUND OF THE INVENTION

1. Field of the Invention

The invention relates to a control apparatus for an engine and a method of controlling an engine, and particularly relates to a technology to suppress vibration of the engine.

2. Description of the Related Art

A flywheel is connected to an output shaft of an engine, and the engine is connected to a transmission through the flywheel. A vehicle may include a dual mass flywheel (DMF) in order to suppress vibration of the engine transmitted to the transmission. The dual mass flywheel includes a first mass connected to the output shaft of the engine and a second mass connected to the first mass through a spring (damper). Rotational fluctuation of the output shaft of the engine is absorbed by the dual mass flywheel, whereby vibration of the engine, for example, during idling operation, is suppressed.

However, because the dual mass flywheel includes the spring, the dual mass flywheel itself may vibrate. For example, if a fuel injection amount is increased by an idle speed control (ISC) system around a resonance point of the dual mass flywheel when a speed of an output shaft of a diesel engine is decreased, resonance between the diesel engine and the dual mass flywheel may occur. In order to suppress such vibration, the technology has been proposed in which the output of the engine is controlled in accordance with angular velocities of the dual mass flywheel.

Japanese Patent Application Publication No. 2-233828 (JP-A-2-233828) describes a vibration suppression apparatus provided with a mechanism that outputs a signal indicative of an angular velocity difference between a first mass and a second mass of a flywheel. In the vibration suppression apparatus, the signal indicative of the angular velocity difference is input to a fuel supply amount control portion so as to suppress unnecessary vibration generated when an internal combustion engine outputs power.

The dual mass flywheel absorbs vibration using elasticity of the spring provided between the first mass and the second mass. In other words, the dual mass flywheel absorbs vibration using the angular velocity difference between the first mass and the second mass. Therefore, even when the resonance between the engine and the dual mass flywheel does not occur, the angular velocity of the first mass and the angular velocity of the second mass may be different from each other. Thus, it is difficult to determine whether the resonance between the engine and the dual mass flywheel occurs based on the angular velocity difference. As a result, the output of the engine may be accidentally increased or decreased by the vibration suppression apparatus described in JP-A-2-233828.

SUMMARY OF THE INVENTION

The invention provides a control apparatus for an engine, and a method of controlling an engine, which accurately suppress vibration of the engine.

A first aspect of the invention relates to a control apparatus for an engine whose output shaft is connected to a flywheel. The control apparatus includes: first calculation means for calculating a first speed of the output shaft of the engine based on a time required for rotating the output shaft by a first crank angle; second calculation means for calculating a second speed of the output shaft of the engine based on a time required for rotating the output shaft by a second crank angle that is larger than a first crank angle; and control means for controlling an output of the engine so that the output of the engine is decreased, when a difference between the first speed and the second speed is larger than a first threshold.

In this configuration, the first speed of the output shaft is calculated based on the time required for rotating the output shaft of the engine by the first crank angle. Further, the second speed of the output shaft is calculated based on the time required for rotating the output shaft of the engine by the second crank angle that is larger than the first crank angle. In this way, it is possible to determine the first speed and the second speed that are substantially the same when the output shaft speed of the engine is stable, and that are different from each other when the output shaft speed of the engine is unstable. This makes it possible to easily determine whether resonance between the engine and the flywheel occurs by comparing the first speed with the second speed. If the difference between the first speed and the second speed is larger than the thresholds, it is determined that the resonance between the engine and the flywheel occurs. Accordingly, if the difference between the first speed and the second speed is larger than the first thresholds, the output of the engine is controlled to be decreased, whereby the vibration is suppressed.

The control means may control the output of the engine so that the output of the engine is decreased, by reducing the amount of the fuel injection in the engine by a larger amount as a rate of decrease in the speed of the output shaft becomes higher.

In this configuration, as the rate of decrease in the output shaft speed becomes higher, the amount of fuel injected in the engine is reduced by a larger amount. This makes it possible to accurately suppress the vibration.

The flywheel may include a first member connected to the output shaft, and a second member connected to the first member through an elastic member.

In this configuration, it is possible to suppress vibration generated in the engine connected to the dual mass flywheel that includes the first member connected to the output shaft, and the second member connected to the first member through the elastic member.

A method of controlling an engine whose output shaft is connected to a flywheel according to a second aspect of the invention includes: calculating a first speed of the output shaft of the engine based on a time required for rotating the output shaft by a first crank angle; calculating a second speed of the output shaft of the engine based on a time required for rotating the output shaft by a second crank angle that is larger than the first crank angle; and controlling an output of the engine so that the output of the engine is decreased, when a difference between the first speed and the second speed is larger than a first threshold.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 schematically shows a configuration of a vehicle in which a control apparatus according to an embodiment of the invention is mounted;
FIG. 2 schematically shows a configuration of an engine of the vehicle in which the control apparatus according to the embodiment of the invention is mounted;
FIG. 3 schematically shows a clutch of the vehicle in which the control apparatus according to the embodiment of the invention is mounted;
FIG. 4 is a functional block diagram of an ECU;
FIG. 5 shows a crank angle;
FIG. 6 is a flowchart showing a control structure of a program executed by the ECU;
FIG. 7 shows a difference $\Delta NE$ between a first speed 10NE and a second speed 180NE, and an angular velocity difference;
FIG. 8 shows changes of a throttle opening and a fuel injection amount; and
FIG. 9 shows changes of an output shaft speed of the engine.

DETAILED DESCRIPTION OF EMBODIMENTS

An embodiment of the invention will be hereinafter described with reference to the attached drawings. In the description of the embodiment, the same components are denoted by the same reference numerals. The names and functions of the components denoted by the same reference numerals are the same, and therefore, the detailed description thereof will not be repeated.

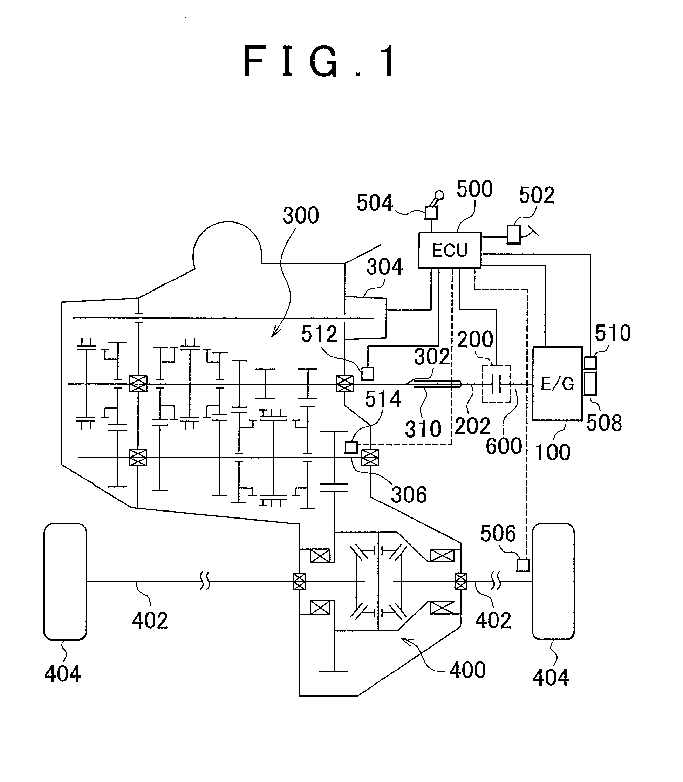

A vehicle in which a control apparatus according to the embodiment of the invention is mounted will be described with reference to FIG. 1. In the vehicle, a driving force generated by an engine 100 is transmitted to wheels 404 through a clutch 200, a transmission 300, a differential gear 400, and a drive shaft 402 so that the vehicle travels. The engine 100, the clutch 200, and the transmission 300 are controlled by an electronic control unit (ECU) 500.

The engine 100 is a diesel engine. It should be noted that, in place of the diesel engine, a gasoline engine may be employed as the engine 100. The clutch 200 is connected to a crankshaft 600 of the engine 100. A clutch output shaft 202 is connected to an input shaft 302 of the transmission 300 through a spline 310.

The transmission 300 includes a constant-mesh gear train. A gear is selected in the transmission 300 by sliding a shift fork shaft using an actuator 304. The actuator 304 may be hydraulically operated, or may be electrically operated. Further, a gear may be selected using an actuator including a direct cylinder, or a manual transmission may be employed.

The ECU 500 receives signals output from an accelerator pedal operation amount sensor 502, a position sensor 504, a vehicle speed sensor 506, a crank position sensor 510 provided so as to face an outer periphery of a timing rotor 508, an input shaft speed sensor 512, and an output shaft speed sensor 514.

The accelerator pedal operation amount sensor 502 detects an operation amount of an accelerator pedal. The position sensor 504 detects a shift position of a shift lever. The vehicle sensor 506 detects a vehicle speed. The crank position sensor 510 detects an output shaft speed (engine speed) NE of the engine 100. The input shaft speed sensor 512 detects an input shaft speed NI of the input shaft 302 of the transmission 300. The output shaft speed sensor 514 detects an output shaft speed NO of the output shaft 306 of the transmission 300.

The ECU 500 performs computation based on the signals output from the sensors listed above, and a program and a map, etc. stored in a memory (not shown). In this way, the ECU 500 controls the engine 100, the clutch 200, and the transmission 300.

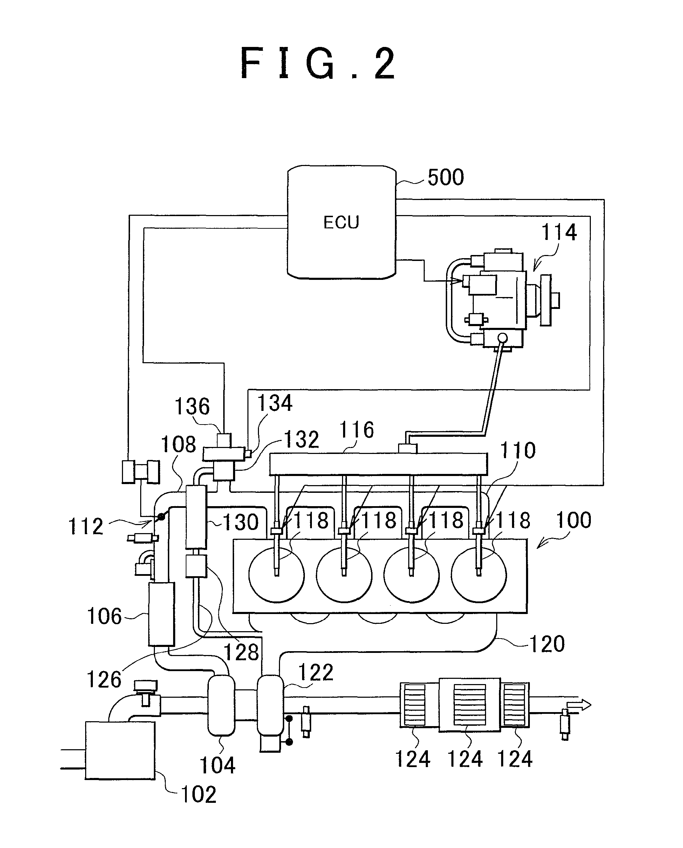

The engine 100 will be described in further detail with reference to FIG. 2. The air to be taken into the engine 100 is filtered by an air cleaner 102, and compressed by a compressor 104 of a turbocharger. The compressed air is cooled in an intercooler 106 through heat exchange with the outside air, and flows through an intake pipe 108 and an intake manifold 110 so as to be introduced to combustion chambers. The amount of fresh air in the air introduced to the combustion chambers is controlled by a throttle valve 112. The throttle valve 112 is an electronic throttle valve operated by an actuator. An opening of the throttle valve 112 is controlled by the ECU 500.

Fuel pressurized by a supply pump 114 and stored in a common rail 116 is injected into each combustion chamber by a corresponding injector 118. The engine 100 generates the driving force when mixture of the air and the injected fuel is combusted in the combustion chamber.

The air-fuel mixture after combustion, that is, exhaust gas, is introduced to an exhaust manifold 120 and flows through a turbine 122 of the turbocharger. Then, the exhaust gas is purified by catalysts 124, and discharged to the outside of the vehicle.

Part of the exhaust gas is recirculated through an EGR pipe 126 connected to the exhaust manifold 120. The exhaust gas that flows through the EGR pipe 126 passes through an oxidation catalyst 128 and cooled in an EGR cooler 130 through heat exchange between the exhaust gas and coolant. The cooled exhaust gas is recirculated through an EGR valve 132 to an intake side, that is, the cooled exhaust gas is recirculated to a portion of the intake pipe 108 downstream of the throttle valve 112.

An amount of the recirculated exhaust gas (EGR amount) is adjusted by an opening of the EGR valve 132 (hereinafter referred to as "EGR valve opening"). The EGR valve opening is controlled by an EGR valve linear solenoid 134. Normally, the EGR valve opening is controlled so that the EGR valve opening is decreased, that is, the EGR amount is reduced, as torque of the engine 100 is increased. More specifically, the EGR valve opening detected by an EGR valve lift sensor 136 is input to the ECU 500, and the EGR valve opening is controlled through feedback so that an oxygen concentration of the intake air, which is changed by recirculation of the exhaust gas, reaches a target value corresponding to the condition of the engine 100 (engine speed NE, boost pressure, temperatures of various portions of the engine 100, an engine load, and an intake air amount). It should be noted that an operation method in which the EGR valve 132 is operated using a negative pressure, and an operation method in which the EGR valve 132 is operated using a motor may be employed, in addition to the operation method in which the EGR valve 132 is operated using the EGR valve linear solenoid 134.

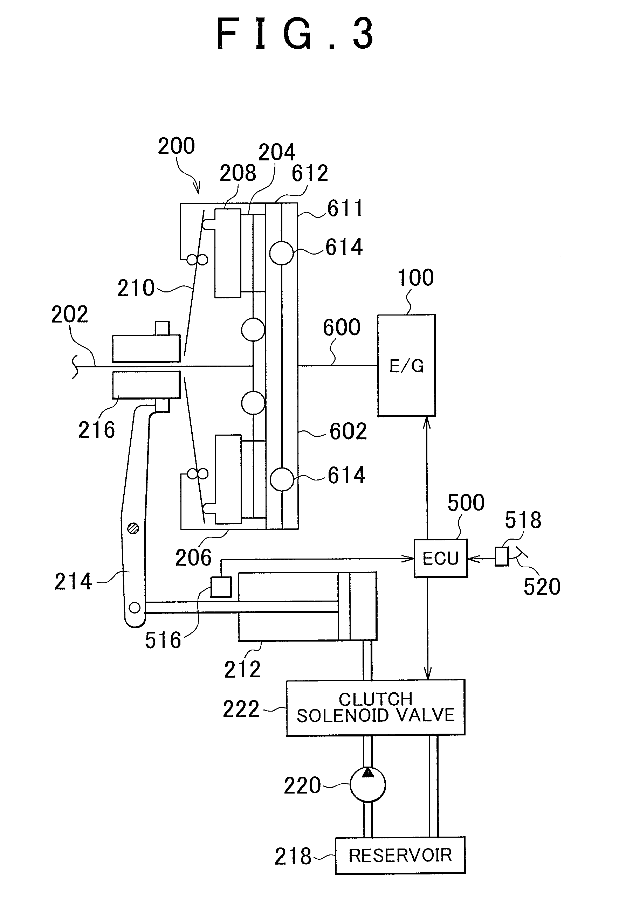

The clutch 200 will be described in further detail with respect to FIG. 3. The clutch 200 is a dry-type single plate friction clutch. As shown in FIG. 3, the clutch 200 includes the clutch output shaft 202, a clutch disc 204 attached to the clutch output shaft 202, a clutch housing 206, a pressure plate 208 provided in the clutch housing 206, a diaphragm spring 210, a clutch release cylinder 212, a release fork 214, and a release sleeve 216.

The diaphragm spring 210 urges the pressure plate 208 to the right in FIG. 3 so as to press the clutch disc 204 against a flywheel 602 attached to the crankshaft 600 of the engine 100, whereby the clutch 200 is engaged.

The clutch release cylinder 212 moves the release sleeve 216 to the right in FIG. 3 through the release fork 214. As a result, an inner edge of the diaphragm spring 210 is moved to the right in FIG. 3. When the inner edge of the diaphragm spring 210 is moved to the right in FIG. 3, the pressure plate 208 is moved to the left in FIG. 3. In this way, the clutch disc 204 is separated from the flywheel 602, whereby the clutch 200 is disengaged.

The hydraulic oil is pumped up from a reservoir 218 by a hydraulic pump 220 and supplied to the clutch release cylinder 212 through a clutch solenoid valve 222 so that a piston of the clutch release cylinder 212 is operated by the hydraulic pressure of the hydraulic oil. The clutch solenoid valve 222 switches between supply and discharge of the hydraulic oil to and from the clutch release cylinder 212. The ECU 500 controls the clutch solenoid valve 222.

When the hydraulic pressure is supplied to the clutch release cylinder 212, the piston of the clutch release cylinder 212 is moved to the left in FIG. 3, and the release sleeve 216 is moved to the right, whereby the clutch 200 is disengaged. The position of the piston of the clutch release cylinder 212 (clutch stroke) is detected by a clutch stroke sensor 516. A signal indicative of the detection result of the clutch stroke sensor 516 is transmitted to the ECU 500.

The ECU 500 detects whether the clutch 200 is disengaged, engaged, or half-engaged based on the signal transmitted from the clutch stroke sensor 516. It should be herein noted that the clutch 200 may be electrically operated. Further, the clutch 200 may be engaged and disengaged when a driver operates a clutch pedal.

The ECU 500 receives a signal from a brake switch 518 as well as the signal from the clutch stroke sensor 516. The ECU 500 determines whether a brake pedal 520 is depressed based on the signal input to the ECU 500 from the brake switch 518.

The flywheel 602 is a dual mass flywheel that includes a first mass 611 and a second mass 612. The first mass 611 is connected to the crankshaft 600, and the second mass 612 is connected to the first mass 611 through a spring (damper) 614.

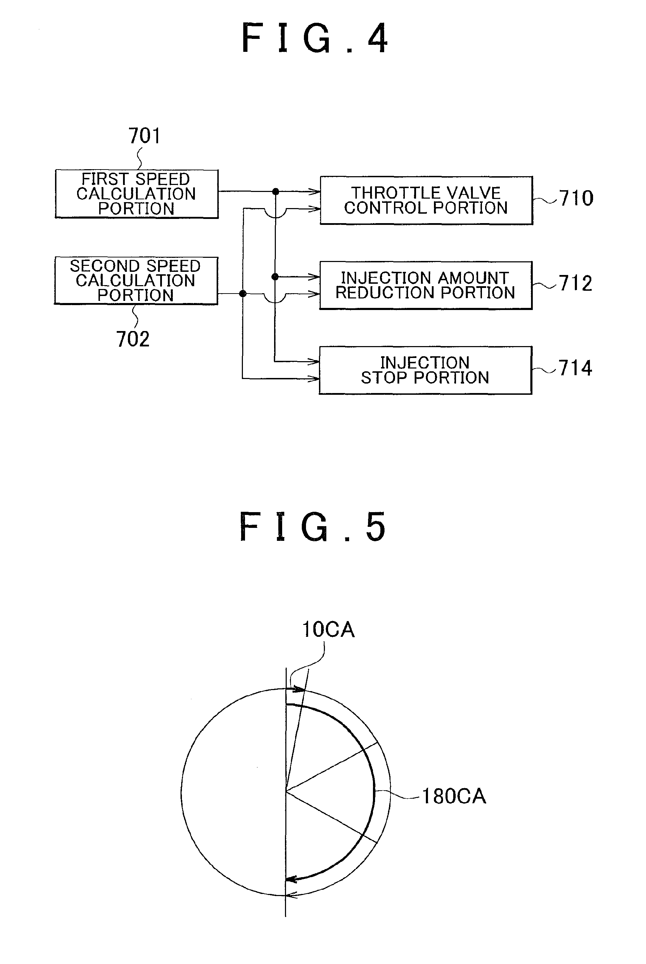

Functions of the ECU 500 according to the embodiment will be described with reference to FIG. 4. The functions of the ECU 500, which will be described below, may be implemented by software, or may be implemented by hardware.

The ECU 500 includes a first speed calculation portion 701, a second speed calculation portion 702, a throttle valve control portion 710, an injection amount reduction portion 712, and an injection stop portion 714.

As shown in FIG. 5, the first speed calculation portion 701 calculates a first speed 10NE [rpm] of the crankshaft 600 based on a time required for rotating the crankshaft 600 by a crank angle of 10°. It should be noted that other crank angle than 10° may be used in calculation.

As shown in FIG. 5, the second speed calculation portion 702 calculates a second speed 180NE [rpm] of the crankshaft 600 based on a time required for rotating the crankshaft 600 by a crank angle of 180°. For example, the second speed 180NE is calculated based on a total time required for rotating the crankshaft 600 by the crank angle of 60° three times. It should be noted that other crank angle than 180° may be used in calculation.

When a difference ΔNE (|180NE -10NE|) between the first speed 10NE and the second speed 180NE is larger than a first threshold, a throttle valve control portion 710 controls output torque of the engine 100 so that the output torque of the engine 100 is decreased, by closing the throttle valve 112. In other words, the throttle valve control portion 710 controls the output torque of the engine 100 so that the output torque of the engine 100 is decreased, by reducing the amount of air introduced into the combustion chambers of the engine 100.

When the difference ΔNE between the first speed 10NE and the second speed 180NE is larger than a second threshold (the second threshold > the first threshold), the injection amount reduction portion 712 controls the output torque of the engine 100 so that the output torque of the engine 100 is decreased, by reducing an amount of fuel injected from the injector 118.

A reduction amount, by which the fuel injection amount is reduced, is determined in accordance with a decrease rate dmfnespd [rpm/s] at which the output shaft speed NE of the engine 100 is decreased. The decrease rate is calculated based on an equation 1 below:

$$\mathrm{dmfnespd} = (\mathrm{NE1} - \mathrm{NE2}) / \Delta T --- (1)$$

where NE1 indicates the value of the output shaft speed NE when the difference ΔNE between the first speed 10NE and the second speed 180NE is larger than the first threshold, NE2 indicates the value of the output shaft speed NE when the difference ΔNE between the first speed 10NE and the second speed 180NE is larger than the second threshold, and ΔT indicates the time from when the difference ΔNE between the first speed 10NE and the second speed 180NE exceeds the first threshold, to when the difference ΔNE exceeds the second threshold. The values of the output shaft speed NE used as "NE1" and "NE2" are detected by using an ordinary method. In other words, the values of the output shaft speed NE used as "NE1" and "NE2" are calculated based on the time required for rotating the crankshaft 600 by a predetermined crank angle (for example, 10°) that is preliminarily set by a designer.

The fuel injection amount, which is an amount of fuel injected from the injector 118, is calculated based on an equation 2 below:

$$\mathrm{qfulldmf} = \mathrm{qfulldmfol} - \mathrm{dmfnespd} \times \mathrm{QFLDMF} --- (2)$$

where "qfulldmf" indicates the current fuel injection amount, "qfulldmfol" indicates the previous fuel injection amount, and "QFLDMF" indicates a coefficient for reduction of the fuel injection amount.

As is apparent from the equations 1 and 2, as the rate of decrease in the output shaft speed NE of the engine 100 is increased, the reduction amount, by which the fuel injection amount is reduced, is increased. In other words, as the rate of decrease in the output shaft speed NE of the engine 100 becomes higher, the fuel injection amount is reduced by a larger amount.

When the difference ΔNE between the first speed 10NE and the second speed 180NE is larger than a third threshold (the third threshold > the second threshold), the injection stop portion 714 controls the output torque of the engine 100 so that the output torque of the engine 100 is decreased, by stopping fuel injection from the injectors 118.

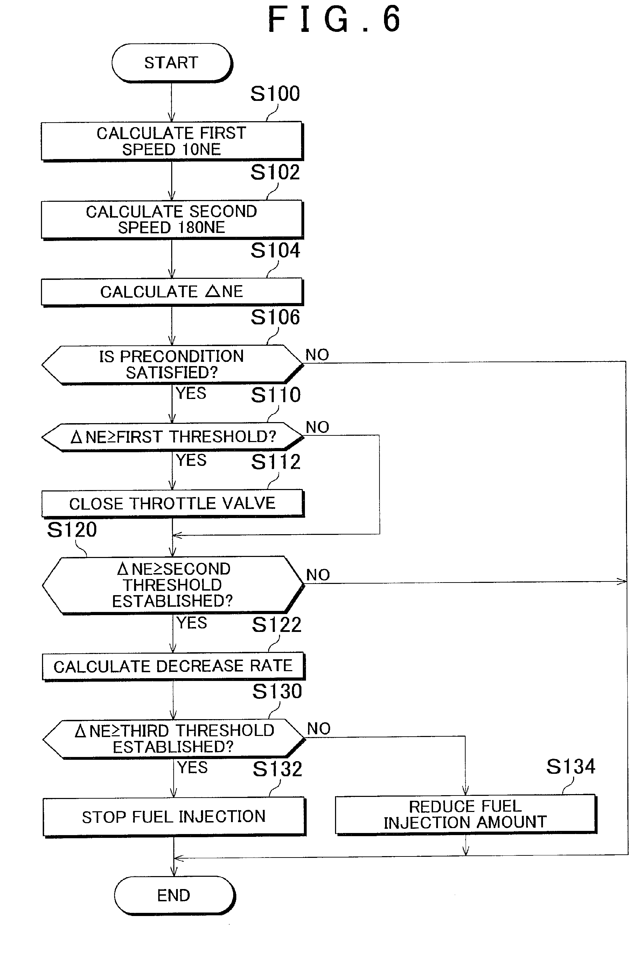

The control structure of a program executed by the ECU 500 according to the embodiment will be described with reference to FIG. 6. The program that will be described below is repeatedly executed at predetermined intervals. It should be noted that the program executed by the ECU 500 may be stored in any recording medium, such as a compact disc (CD) or a digital versatile disc (DVD), so as to distribute the program to the market.

In step (hereinafter simply abbreviated as "S") 100, the ECU 500 calculates the first speed 10NE of the crankshaft 600 based on the time required for rotating the crankshaft 600 by the crank angle of 10°.

In S102, the ECU 500 calculates the second speed 180NE of the crankshaft 600 based on the time required for rotating the crankshaft 600 by the crank angle of 180°. In S 104, the ECU 500 calculates the difference ΔNE between the first speed 10NE and the second speed 180NE.

In S106, the ECU 500 determines whether a precondition is satisfied. More specifically, the ECU 500 determines that the precondition is satisfied when a condition that the output shaft speed NE of the engine 100 is equal to or lower than a threshold is satisfied, and at least one of the following conditions is satisfied: a condition that the brake pedal 520 is depressed; a condition that the vehicle speed is equal to or lower than a threshold; a condition that the output shaft speed NE of the engine 100 is equal to or lower than a threshold, and the clutch 200 is engaged; and a condition that the vehicle is traveling on an upward slope. Because the determination as to whether the vehicle is traveling on an upward slope or not may be made using a known technology, the detailed description thereof will be omitted. If the ECU 500 determines that the precondition is satisfied (YES in S106), the process proceeds to S 110. If the ECU 500 determines that the precondition is not satisfied (NO in S106), the process is terminated.

In S110, the ECU 500 determines whether the difference ΔNE between the first speed 10NE and the second speed 180NE is larger than the first threshold. If the ECU 500 determines that difference ΔNE between the first speed 10NE and the second speed 180NE is larger than the first threshold (YES in S110), the process proceeds to S112. If the ECU 500 determines that difference ΔNE between the first speed 10NE and the second speed 180NE is equal to or smaller than the first threshold (NO in S110), the process proceeds to S120. In S112, the ECU 500 controls the throttle valve 112 to close the throttle valve 112.

In S120, the ECU 500 determines whether the difference ΔNE between the first speed 10NE and the second speed 180NE is larger than the second threshold. If the ECU 500 determines that the difference ΔNE between the first speed 10NE and the second speed 180NE is larger than the second threshold (YES in S120), the process proceeds to S122. If the ECU 500 determines that the difference ΔNE between the first speed 10NE and the second speed 180NE is equal to or smaller than the second threshold (NO in S120), the process is terminated. In S122, the ECU 500 calculates the rate of decrease in the output shaft speed NE of the engine 100.

In S130, the ECU 500 determines whether the difference ΔNE between the first speed 10NE and the second speed 180NE is larger than the third threshold. If the ECU 500 determines that the difference ΔNE between the first speed 10NE and the second speed 180NE is larger than the third threshold (YES in S130), the process proceeds to S132. If the ECU 500 determines that the difference ΔNE between the first speed 10NE and the second speed 180NE is equal to or smaller than the third threshold (NO in S 130), the process proceeds to S 134.

In S132, the ECU 500 stops the fuel injection from the injectors 118. In S134, the ECU 500 reduces the amount of fuel injected from the injector 118.

The operation of the control apparatus according to the embodiment based on the aforementioned structure and flowchart will be hereinafter described.

During the operation of the engine 100, the ECU 500 calculates the first speed 10NE of the crankshaft 600 based on the time required for rotating the crankshaft 600 by the crank angle of 10° (S100). Further, the ECU 500 calculates the second speed 180NE of the crankshaft 600 based on the time required for rotating the crankshaft 600 by the crank angle of 180° (S102). In this way, it is possible to determine the first speed 10NE and the second speed 180NE that are substantially the same when the output shaft speed NE of the engine 100 is stable, and are different from each other when the output shaft speed NE of the engine 100 is unstable.

The ECU 500 calculates the difference ΔNE between the first speed 10NE and the second speed 180NE in order to compare the first speed 10NE with the second speed 180NE (S 104).

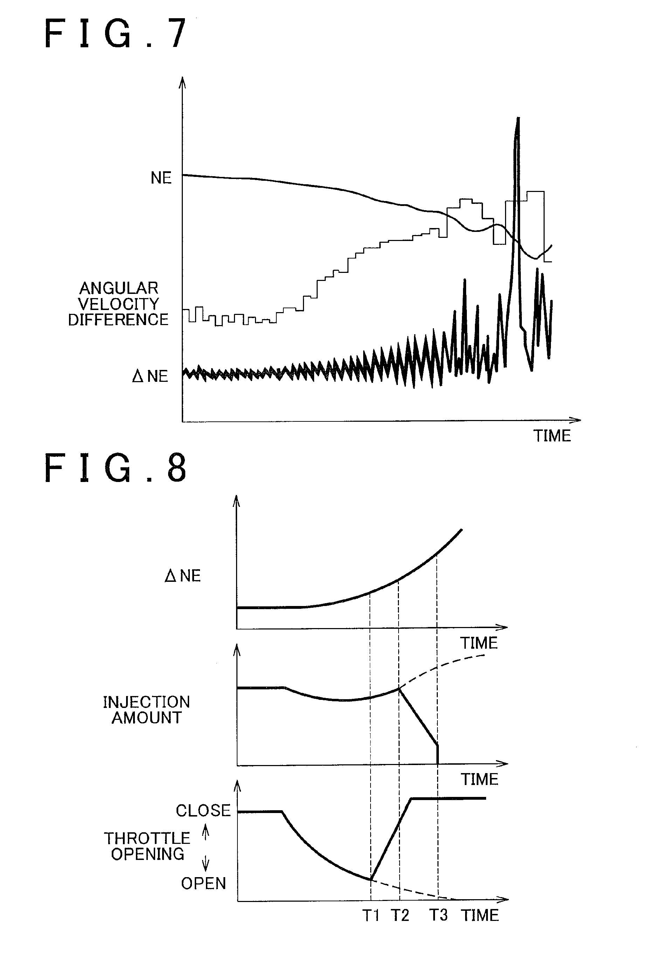

The dual mass flywheel employed as the flywheel 602 absorbs vibration using elasticity of the spring 614 provided between the first mass 611 and the second mass 612. In other words, the dual mass flywheel absorbs vibration by using a difference between an angular velocity of the first mass 611 and an angular velocity of the second mass 612. Therefore, even when resonance between the engine 100 and the dual mass flywheel does not occur, the angular velocity of the first mass 611 may be different from the angular velocity of the second mass 612 as shown in FIG. 7. Therefore, it is difficult to determine whether the resonance between the engine 100 and the dual mass flywheel occurs based on the angular velocity difference.

In contrast, the first speed 10NE and the second speed 180NE are substantially the same when the output shaft speed NE of the engine 100 is stable, and are different from each other when the output shaft speed NE of the engine 100 is unstable. Therefore, as shown in FIG. 7, the difference ΔNE between the first speed 10NE and the second speed 180NE becomes particularly large when the resonance between the engine 100 and the dual mass flywheel occurs. Accordingly, when the difference ΔNE between the first speed 10NE and the second speed 180NE is used for making a determination as to whether the resonance between the engine 100 and the dual mass flywheel occurs, it is possible to easily make the determination, as compared to the case where the angular velocity difference is used for making the determination.

Therefore, according to the embodiment, the ECU 500 performs a control to suppress the resonance between the engine 100 and the dual mass flywheel in accordance with the difference ΔNE between the first speed 10NE and the second speed 180NE.

If the precondition is satisfied (YES in S106), it is determined whether the difference ΔNE between the first speed 10NE and the second speed 180NE is larger than the first threshold (S 110).

If it is determined that the difference ΔNE between the first speed 10NE and the second speed 180NE is larger than the first threshold (YES in S110), at a time T1, the throttle valve 112 is controlled to start closing in a manner as shown by a solid line in FIG. 8 (S 112).

If it is determined that the difference ΔNE between the first speed 10NE and the second speed 180NE is larger than the second threshold (YES in S120), the ECU 500 calculates the rate of decrease in the output shaft speed NE of the engine 100 (S122).

If it is determined that the difference ΔNE between the first speed 10NE and the second speed 180NE is equal to or smaller than the third threshold (NO in S130), the amount of fuel injected from the injector 118 starts to be reduced at a time T2 in a manner as shown by another solid line in FIG. 8 (S 134).

If it is determined that the difference ΔNE between the first speed 10NE and the second speed 180NE is larger than the third threshold (YES in S130), fuel injection from the injectors 118 is stopped at a time T3 as shown by another solid line in FIG. 8 (S 132).

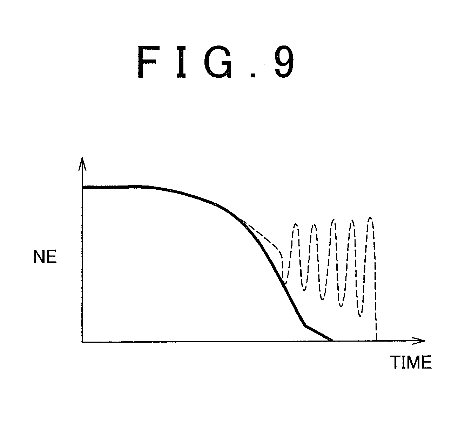

This makes it possible to decrease the output torque of the engine 100. Therefore, as shown by a solid line in FIG. 9, it is possible to suppress vibration due to the resonance between the engine 100 and the dual mass flywheel.

As described above, with the control apparatus in the embodiment, the first speed 10NE of the crankshaft is calculated based on the time required for rotating the crankshaft by the crank angle of 10°. Further, the second speed 180NE of the crankshaft is calculated based on the time required for rotating the crankshaft by the crank angle of 180°. If the difference ΔNE between the first speed 10NE and the second speed 180NE is larger than the thresholds, the output of the engine is decreased. This makes it possible to suppress vibration due to the resonance between the engine and the dual mass flywheel.

While the invention has been described with reference to example embodiments thereof, it should be understood that the invention is not limited to the example embodiments or constructions. To the contrary, the invention is intended to cover various modifications and equivalent arrangements.

**Claims**

1. A control apparatus for an engine (100) whose output shaft (600) is connected to a flywheel (602), **characterized by** comprising:

   first calculation means (701) for calculating a first speed of the output shaft (600) of the engine (100) based on a time required for rotating the output shaft (600) by a first crank angle;
   second calculation means (702) for calculating a second speed of the output shaft (600) of the engine (100) based on a time required for rotating the output shaft (600) by a second crank angle that is larger than the first crank angle; and
   control means (500) for controlling an output of the engine (100) so that the output of the engine (100) is decreased, when a difference between the first speed and the second speed is larger than a first threshold.

2. The control apparatus according to claim 1, wherein the control means (500) controls the output of the engine (100) so that the output of the engine (100) is decreased, by reducing an amount of air introduced into a combustion chamber of the engine (100).

3. The control apparatus according to claim 1 or 2, wherein the control means (500) controls the output of the engine (100) so that the output of the engine (100) is decreased, by reducing an amount of fuel injection in the engine (100), when the difference between the first speed and the second speed is larger than a second threshold that is larger than the first threshold.

4. The control apparatus according to claim 3, wherein the control means (500) controls the output of the engine (100) so that the output of the engine (100) is decreased, by stopping the fuel injection in the engine (100), when the difference between the first speed and the second speed is larger than a third threshold that is larger than the second threshold.

5. The control apparatus according to any one of claims 1 to 4, wherein the control means (500) controls the output of the engine (100) so that the output of the engine (100) is decreased, by reducing the amount of the fuel injection in the engine (100) by a larger amount as a rate of decrease in the speed of the output shaft (600) becomes higher.

6. The control apparatus according to any one of claims 1 to 5, wherein the flywheel (602) includes a first member (611) connected to the output shaft (600), and a second member (612) connected to the first member (611) through an elastic member (614).

7. A method of controlling an engine (100) whose output shaft (600) is connected to a flywheel (602), comprising:

calculating a first speed of the output shaft (600) of the engine (100) based on a time required for rotating the output shaft (600) by a first crank angle;
calculating a second speed of the output shaft (600) of the engine (100) based on a time required for rotating the output shaft (600) by a second crank angle that is larger than the first crank angle; and
controlling an output of the engine (100) so that the output of the engine (100) is decreased, when a difference between the first speed and the second speed is larger than a first threshold.

8. The method according to claim 7, wherein the output of the engine (100) is decreased by reducing an amount of air introduced into a combustion chamber of the engine (100).

9. The method according to claim 7 or 8, wherein the output of the engine (100) is decreased by reducing an amount of fuel injection in the engine (100), when the difference between the first speed and the second speed is larger than a second threshold that is larger than the first threshold.

10. The method according to claim 9, wherein the output of the engine (100) is decreased by stopping the fuel injection in the engine (100), when the difference between the first speed and the second speed is larger than a third threshold that is larger than the second threshold.

11. The method according to any one of claims 7 to 10, wherein the output of the engine (100) is decreased by reducing the amount of the fuel injection in the engine (100) by a larger amount as a rate of decrease in the speed of the output shaft (600) becomes higher.

12. The method according to any one of claims 7 to 11, wherein the flywheel (602) includes a first member (611) connected to the output shaft (600), and a second member (612) connected to the first member (611) through an elastic body (614).

# F I G . 1

# F I G . 2

# F I G . 3

CLUTCH
SOLENOID VALVE

RESERVOIR

E/G

ECU

# F I G . 4

701

FIRST SPEED
CALCULATION
PORTION

THROTTLE VALVE
CONTROL PORTION — 710

SECOND SPEED
CALCULATION
PORTION

INJECTION AMOUNT
REDUCTION PORTION — 712

702

INJECTION
STOP PORTION — 714

# F I G . 5

10CA

180CA

# F I G . 6

START

S100

CALCULATE FIRST
SPEED 10NE

S102

CALCULATE SECOND
SPEED 180NE

S104

CALCULATE △NE

S106

IS PRECONDITION
SATISFIED? — NO

YES

S110

△NE≥FIRST THRESHOLD? — NO

YES

S112

CLOSE THROTTLE VALVE

S120

△NE≥SECOND
THRESHOLD
ESTABLISHED? — NO

YES

S122

CALCULATE DECREASE RATE

S130

△NE≥THIRD THRESHOLD
ESTABLISHED? — NO

YES

S132

STOP FUEL INJECTION

S134

REDUCE FUEL
INJECTION AMOUNT

END

# FIG.7

# FIG.8

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2233828 A